# EUROPEAN PATENT APPLICATION

(11) **EP 2 051 565 A2**
(43) Date of publication of application: **22.04.2009**
(21) Application number: 07123692.1
(22) Date of filing: 19.12.2007
(51) Int. Cl.: H05B 33/08, H05B 37/02

(54) **Color-temperature adjustable light-emitting device and control circuitry thereof**

(30) Priority: 19.10.2007 TW 96217559 U
(71) Applicant: Prodisc Technology Inc., Taipei 248 (TW)
(72) Inventor: Teng, Kuo-Hsin, 248 Taipei (TW); Huang, Ching-Yuan, 248 Taipei (TW); Wu, Jyh-Way, 248 Taipei (TW); Lee, Cai-Nan, 248 Taipei (TW); Chen, Hon-Lun, 248 Taipei (TW)
(74) Representative: Lang, Christian

(57) **Abstract**

The present invention discloses a color-temperature adjustable light-emitting device and a control circuitry thereof. Therein, the light-emitting device comprises a signal control circuit, an isolation circuit, current driving circuits, light-emitting diodes, and a protection circuit. The present invention implements the signal control circuit to control the plurality of current driving circuits to drive the light-emitting diodes, respectively. Since the signal control circuit can simultaneously accurately control the plural light-emitting diodes, a color temperature of mixed light of the light-emitting diodes can be adjusted between 1,500K and 20,000K.

## Description

### BACKGROUND OF THE INVENTION

### 1. Technical Field

The present invention relates to a color-temperature adjustable light-emitting device and a control circuitry thereof and, more particularly, to a light-emitting device and a control circuitry thereof for adjusting a color-temperature of light-emitting diodes.

### 2. Description of Related Art

With the development of the technology relating to light-emitting diodes, light-emitting diodes have been widely applied to and popularized in people's daily life for, such as, backlight modules of displays and daily lighting. When light-emitting diodes are used for daily lighting, for satisfying various practical needs in diverse occasions, it is important to properly and accurately adjust the color temperature of the light-emitting diodes.

For instance, in a conventional color-temperature adjustable light-emitting device that has a light-emitting diode array composed of red light-emitting diodes, green light-emitting diodes and blue light-emitting diodes, a plurality of control modules are employed to control the turn-on currents of the red, green and blue light-emitting diodes, respectively, so as to adjust the light intensity of the red, green and blue light-emitting diodes to make the mixed light thereof present a desired color temperature.

However, such control modules of the conventional color-temperature adjustable light-emitting device are not satisfactory in accurately controlling the current and therefore are apt to cause current variations. As a result, the light-emitting diodes controlled thereby may not successfully present the desired color temperature and may be subject to irregular light intensity. Besides, while one control circuit can merely control the light-emitting diodes of one color, the manufacturing cost of the conventional color-temperature adjustable light-emitting is significantly increased.

An alternative conventional color-temperature adjustable light-emitting device implements white light-emitting diodes in conjunction of red light-emitting diodes or yellow light-emitting diodes so that the color temperature of the white light-emitting diodes can be adjusted by the light emitted from the red light-emitting diodes or yellow light-emitting diodes. However, such conventional color-temperature adjustable light-emitting device has limited color-temperature adjustment, for instance, from 2,500K to 5,000K, so is inadequate to be widely applied to various occasions.

### SUMMARY OF THE INVENTION

The present invention has been accomplished under these circumstances in view and implements one signal control circuit to control a plurality of light-emitting diodes, so that the mixed light of the light-emitting diodes with different colors can present a desired color temperature. Further, the signal control circuit accurately controls a current driving circuit to output a current signal with a specific intensity for driving the light-emitting diodes and making the light-emitting diodes accurately produce a desired light intensity so as to easily control the color temperature of the light-emitting device.

To achieve the above objectives, the present invention provides a color-temperature adjustable light-emitting device, which comprises: a signal control circuit, at least having a first control signal output end for outputting a first control signal, and a second control signal output end for outputting a second control signal; a first isolation circuit, having an input end electrically connected to the first control signal output end; a first current driving circuit, having an input end electrically connected to an output end of the first isolation circuit; at least one first light-emitting diode, having an anode electrically connected to an output end of the first current driving circuit; a first protection circuit, serially connected between a cathode of the first light-emitting diode and a ground node, and electrically feedback-coupled to the input end of the first current driving circuit; a second isolation circuit, having an input end electrically connected to the second control signal output end; a second current driving circuit, having an input end electrically connected to an output end of the second isolation circuit; at least one second light-emitting diode, having an anode electrically connected to an output end of the second current driving circuit; and a second protection circuit, serially connected between a cathode of the second light-emitting diode and the ground node, and electrically feedback-coupled to the input end of the second current driving circuit.

To achieve the above objectives, the present invention also provides a color-temperature adjustable light-emitting device, which comprises: a signal control circuit, at least having a first control signal output end for outputting a first control signal, a second control signal output end for outputting a second control signal, and a third control signal output end for outputting a third control signal; a first isolation circuit, having an input end electrically connected to the first control signal output end; a first current driving circuit, having an input end electrically connected to an output end of the first isolation circuit; at least one first light-emitting diode, having an anode electrically connected to an output end of the first current driving circuit; a first protection circuit, serially connected between a cathode of the first light-emitting diode and a ground node, and electrically feedback-coupled to the input end of the first current driving circuit; a second isolation circuit, having an input end electrically connected to the second control signal output end; a second current driving circuit, having an input end electrically connected to an output end of the second isolation circuit; at least one second light-emitting diode, having an anode electrically connected to an output end of the second current driving circuit; a second protection circuit, serially connected between a cathode of the second light-emitting diode and the ground node, and electrically feedback-coupled to the input end of the second current driving circuit; a third isolation circuit, having an input end electrically connected to the third control signal output end; a third current driving circuit, having an input end electrically connected to an output end of the third isolation circuit; at least one third light-emitting diode, having an anode electrically connected to an output end of the third current driving circuit; and a third protection circuit, serially connected between a cathode of the third light-emitting diode and the ground node, and electrically feedback-coupled to the input end of the third current driving circuit.

To achieve the above objectives, the present invention further provides a control circuitry of a color-temperature adjustable light-emitting device, which comprises: a signal control circuit, at least having a control signal output end for outputting a control signal; an isolation circuit, having an input end electrically connected to the control signal output end; a current driving circuit, having an input end electrically connected to an output end of the isolation circuit and generating a current signal to drive a light-emitting diode according to the control signal, wherein the light-emitting diode has an anode electrically connected to an output end of the current driving circuit; and a protection circuit, serially connected between a cathode of the light-emitting diode and a ground node, and electrically feedback-coupled to the input end of the first current driving circuit.

Thereupon, the achievement of the present invention at least includes:
1. Accurately controlling the current driving circuits with the control signals output by the signal control circuits;
2. Preventing the control signals output by the signal control circuit from being interfered by using the isolation circuits to isolate negative feedback signals; and
3. Protecting the light-emitting diodes from being damaged by over currents with the protection circuits.

### BRIEF DESCRIPTION OF THE DRAWINGS

The invention as well as a preferred mode of use, further objectives and advantages thereof, will best be understood by reference to the following detailed description of an illustrative embodiment when read in conjunction with the accompanying drawings, wherein:
Fig. 1 illustrates a first embodiment of the color-temperature adjustable light-emitting device of the present invention;
Fig. 2 illustrates a modification of the first embodiment of the color-temperature adjustable light-emitting device of the present invention;
Fig. 3 illustrates a second embodiment of the color-temperature adjustable light-emitting device of the present invention; and
Fig. 4 illustrates a modification of the second embodiment of the color-temperature adjustable light-emitting device of the present invention.

### DETAILED DESCRIPTION OF THE PREFERRED EMBODIMENT

### <First Embodiment>

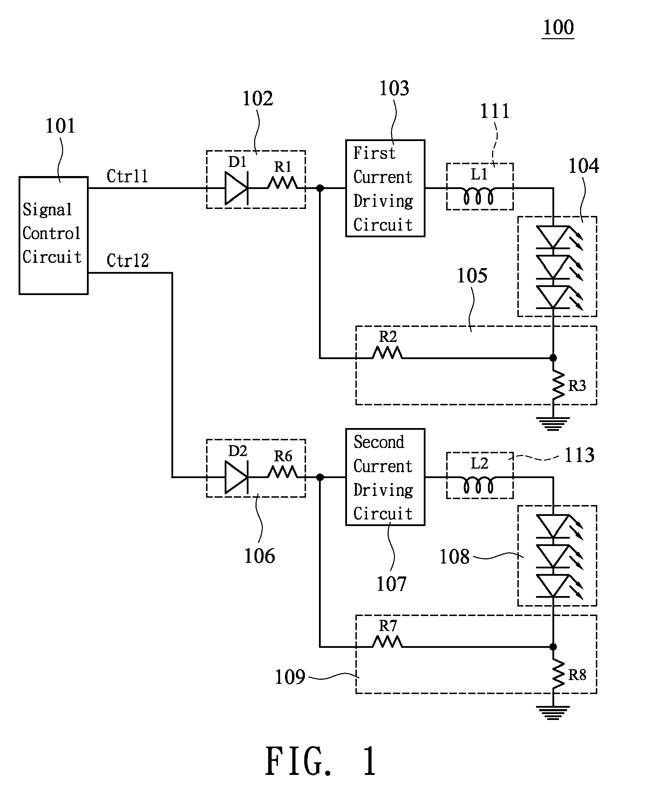

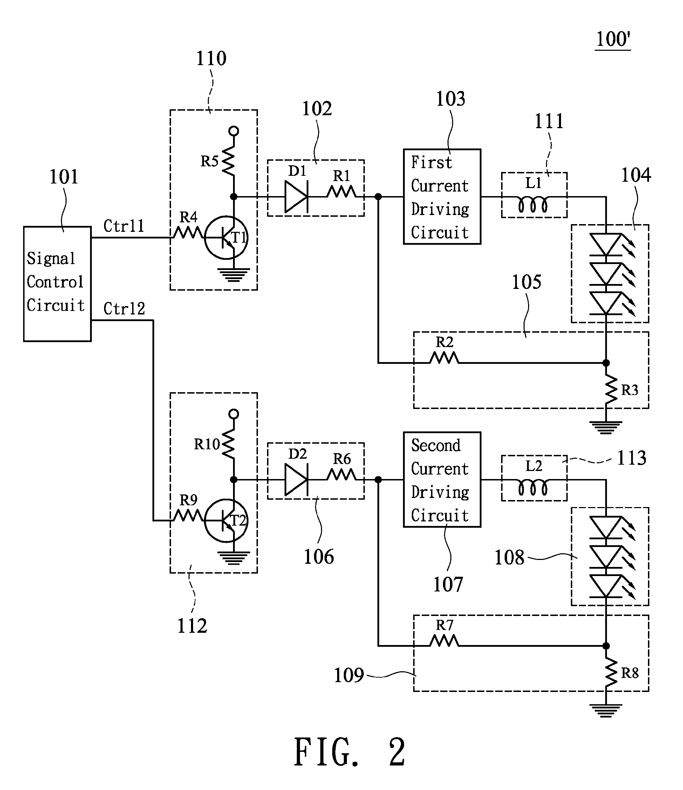

Fig. 1 illustrates a first embodiment of the color-temperature adjustable light-emitting device 100 while Fig. 2 illustrates a modification of the first embodiment of the color-temperature adjustable light-emitting device 100' of the preset invention.

As shown in Fig. 1, the color-temperature adjustable light-emitting device 100 comprises a signal control circuit 101, a first isolation circuit 102, a first current driving circuit 103, at least one first light-emitting diode 104, a first protection circuit 105, a second isolation circuit 106, a second current driving circuit 107, at least one second light-emitting diode 108 and a second protection circuit 109.

The signal control circuit 101 may be a PWM (Pulse Width Modulation) circuit, having a first control signal output end for outputting a first control signal Ctrl1, and a second control signal output end for outputting a second control signal Ctrl2. Since the PWM circuit features programmable control signal outputting, it programly controls the first control signal Ctrl1 and the second control signal Ctrl2 so as to accurately control the first current driving circuit 103 and the second current driving circuit 107.

The first isolation circuit 102 has an input end electrically connected to the first control signal output end of the signal control circuit 101 for isolating a negative feedback signal so as to prevent the negative feedback signal from interfering the first control signal Ctrl1 output by the signal control circuit 101 and in turn avoid the first current driving circuit 103 to misread the received first control signal Ctrl 1 and output a wrong first current signal.

The first isolation circuit 102 may comprise a first diode D 1 and a first resistor R1. Therein, an anode of the first diode D1 is electrically connected to the first control signal output end while the first resistor R1 has one end electrically connected to a cathode of the first diode D1 and has one opposite end electrically connected to an input end of the first current driving circuit 103.

The first current driving circuit 103 has the input end electrically connected to the output end of the first isolation circuit 102 and receives the first control signal Ctrl1 and a negative feedback signal generated by the first protection circuit 105 so as to generate a first current signal ranging from 0.35 ampere to 0.7 ampere according to the first control signal Ctrl1. The negative feedback signal facilitates preventing the first current signal generated by the first current driving circuit 103 from presenting an over current that is unbearable to the first light-emitting diode 104.

The first light-emitting diode 104 has an anode electrically connected to the output end of the first current driving circuit 103 and receives the first current signal so as to be driven and generate an adjustable light intensity according to the first current signal. For example, the first control signal Ctrl1 may be set such that the first current driving circuit 103 outputs a specific first current signal and in turn adjusts the light intensity of the first light-emitting diode 104.

The first protection circuit 105 is serially connected between a cathode of the first light-emitting diode 104 and a ground node, and is electrically feedback-coupled to the input end of the first current driving circuit 103. The first protection circuit 105 facilitates providing the negative feedback signal to the first current driving circuit 103 so as to protect the first light-emitting diode 104 from being damaged by over currents.

The first protection circuit 105 may comprise a second resistor R2 and a third resistor R3. Therein, the second resistor R2 has one end electrically connected to the input end of the first current driving circuit 103 and has an opposite end electrically connected to the cathode of the first light-emitting diode 104. The third resistor R3 also has one end electrically connected to the cathode of the first light-emitting diode 104 and has an opposite end electrically connected to the ground node. The resistances of the second resistor R2 and the third resistor R3 may be adjusted as needed.

Moreover, since the first current driving circuit 103 may be of a positive edge-triggered circuit or a negative edge-triggered circuit, for converting the first control signal Ctrl1 output by the signal control circuit 101 to a control signal with proper potential, the present embodiment further comprises a first pulse signal control circuit 110. As shown in Fig. 2, the first pulse signal control circuit 110 has an input end electrically connected to the first control signal output end and has an output end electrically connected to the input end of the first isolation circuit 102 so as to convert the first control signal Ctrl1 from the low potential to a high potential.

The first pulse signal control circuit 110 may comprise a fourth resistor R4, a first transistor T1, and a fifth resistor R5. Therein, the fourth resistor R4 has one end electrically connected to the first control signal output end and has an opposite end electrically connected to a base of the first transistor T1. The first transistor T1 is an NPN transistor that has an emitter electrically connected to the ground node and has a collector electrically connected to the input end of the first isolation circuit 102. The fifth resistor R5 has one end electrically connected to the collector of the first transistor T1 and has an opposite end electrically connected to the first control signal output end.

In addition, for preventing the current signal output by the first current driving circuit 103 from being blended with noise that causes irregular light intensity of the first light-emitting diode 104, the present invention may further comprises a first noise filtering circuit 111. The first noise filtering circuit 111 may be a first inductor L1, which is serially connected between the output end of the first current driving circuit 103 and the anode of the first light-emitting diode 104 for filtering the noise in the first current signal so that the first current signal can be stably output to drive the first light-emitting diode 104. Thereupon, the first light-emitting diode 104 is ensured from irregular light intensity.

Besides, since the signal control circuit 101 has the first control signal output end and the second control signal output end, it can simultaneously output the first control signal Ctrl1 and the second control signal Ctrl2 to control the first light-emitting diode 104 and the second light-emitting diode 108, respectively. While how the signal control circuit 101 works to control the light intensity of the first light-emitting diode 104 has been described above, the second light-emitting diode 108 works in the same manner and need not be discussed at length herein. The following description will be merely directed to the connection among the components.

The second isolation circuit 106 has an input end electrically connected to the second control signal output end of the signal control circuit 101. The second isolation circuit 106 may comprise a second diode D2 and a sixth resistor R6. Therein, an anode of the second diode D2 is electrically connected to the second control signal output end while the sixth resistor R6 has one end electrically connected to a cathode of the second diode D2 and has an opposite end electrically connected to an input end of the second current driving circuit 107.

The second current driving circuit 107 has an input end electrically connected to an output end of the second isolation circuit 106 and receives the second control signal Ctrl2 and a negative feedback signal generated by the second protection circuit 109 so as to generate a second current signal ranging from 0.35 ampere to 0.7 ampere according to the second control signal Ctrl2.

The second light-emitting diode 108 has an anode electrically connected to an output end of the second current driving circuit 107 and receives the second current signal so as to be driven and generate an adjustable light intensity according to the second current signal. For example, the second control signal Ctrl2 may be set such that the second current driving circuit 107 outputs a specific second current signal and in turn adjusts the light intensity of the second light-emitting diode 108.

The second protection circuit 109 is serially connected between a cathode of the second light-emitting diode 108 and the ground node, and is electrically feedback-coupled to the input end of the second current driving circuit 107. The second protection circuit 109 may comprise a seventh resistor R7 and an eighth resistor R8. Therein, the seventh resistor R7 has one end electrically connected to the input end of the second current driving circuit 107 and has an opposite end electrically connected to the cathode of the second light-emitting diode 108. The eighth resistor R8 also has one end electrically connected to the cathode of the second light-emitting diode 108 and has an opposite end electrically connected to the ground node. The resistances of the seventh resistor R7 and the eighth resistor R8 may be adjusted as needed.

Similarly, since the second current driving circuit 107 may be also of a positive edge-triggered circuit or a negative edge-triggered circuit, for converting the second control signal Ctrl2 output by the signal control circuit 101 to a control signal with proper potential, the present embodiment further comprises a second pulse signal control circuit 112. As shown in Fig. 2, the second pulse signal control circuit 112 has an input end electrically connected to the second control signal output end and has an output end electrically connected to the input end of the second isolation circuit 106 so as to convert the second control signal Ctrl2 from the low potential to a high potential.

The second pulse signal control circuit 112 may comprise a ninth resistor R9, a second transistor T2, and a tenth resistor R10. Therein, the ninth resistor R9 has one end electrically connected to the second control signal output end and has an opposite end electrically connected to a base of the second transistor T2. The second transistor T2 is an NPN transistor that has an emitter electrically connected to the ground node and has a collector electrically connected to the input end of the second isolation circuit 106. The tenth resistor R10 has one end electrically connected to the collector of the second transistor T2 and has an opposite end electrically connected to the second control signal output end.

In addition, for preventing the current signal output by the second current driving circuit 107 from being blended with noise that causes irregular light intensity of the second light-emitting diode 108, the present invention may further comprises a second noise filtering circuit 113. The second noise filtering circuit 113 may be a second inductor L2, which is serially connected between the output end of the second current driving circuit 107 and the anode of the second light-emitting diode 108 for filtering the noise in the second current signal so that the second current signal can be stably output to drive the second light-emitting diode 108. Thereupon, the second light-emitting diode 108 is ensured from irregular light intensity.

The present embodiment used the feature of the signal control circuit 101 where the signal control circuit 101 can accurately control the first current driving circuit 103 and the second current driving circuit 107, to accurately control the light intensity of the first light-emitting diode 104 and the second light-emitting diode 108, respectively, so as to adjust a light temperature of the mixed light. In the present embodiment, the first light-emitting diode 104 and the second light-emitting diode 108 may be a green LED and a red LED, a yellow LED and a blue LED, or a white LED and a colored LED. With different collocations of diverse LEDs, light with adjustable color temperature can be generated. According to the present invention, the achievable color temperature is ranging from 1,500K to 20,000K so as to be applied in various occasions in responding to a user's need.

For example, when the first light-emitting diode 104 is a green LED and the second light-emitting diode 108 is a red LED, the first control signal Ctrl1 with a signal value of 80% and the second control signal Ctrl2 with a signal value of 29% make the first current driving circuit 103 and the second current driving circuit 107 output the first current signal and the second current signal, each of 0.37 ampere so as to cause the mixed light of the first light-emitting diode 104 and the second light-emitting diode 108 to present the color temperature of 1,500K.

### <Second Embodiment>

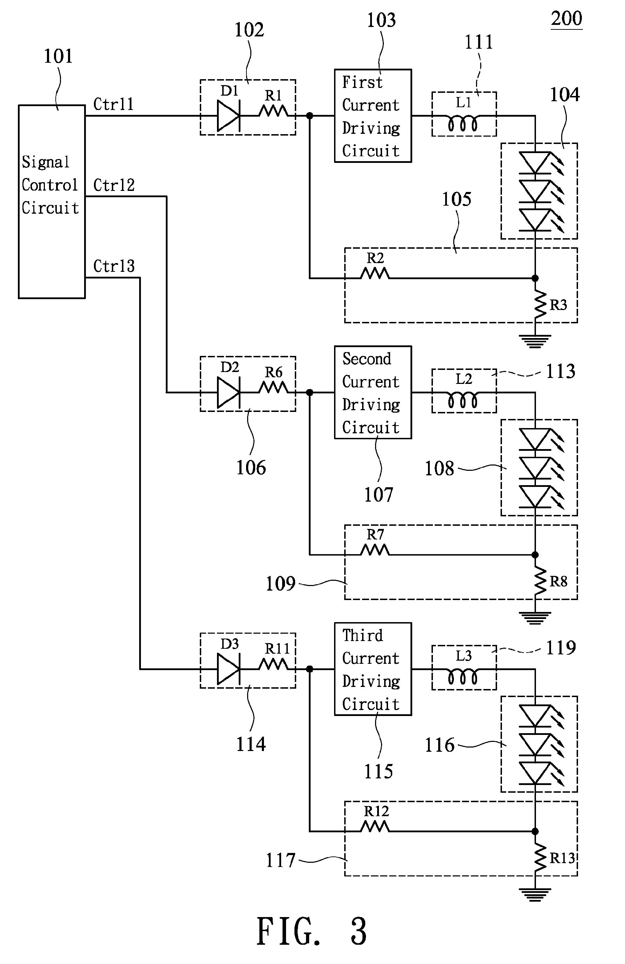

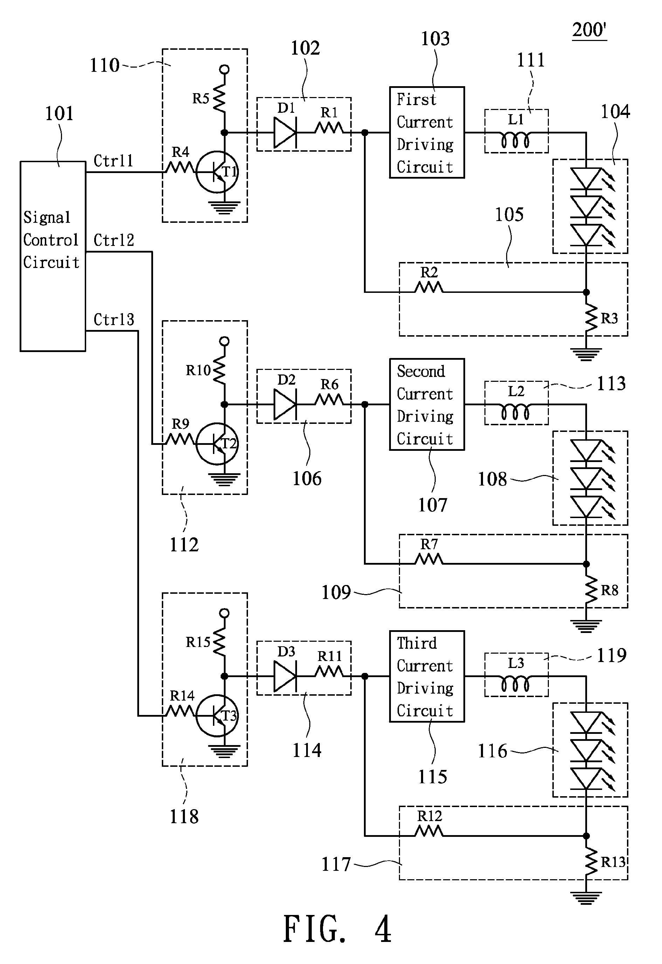

Fig. 3 illustrates a second embodiment of the color-temperature adjustable light-emitting device 200 while Fig. 4 illustrates a modification of the second embodiment of the color-temperature adjustable light-emitting device 200' of the preset invention.

As shown in Fig. 3, for further expanding the application of the first embodiment, the present embodiment provides an alternative color-temperature adjustable light-emitting device 200, comprises a signal control circuit 101, a first isolation circuit 102, a first current driving circuit 103, at least one first light-emitting diode 104, a first protection circuit 105, a second isolation circuit 106, a second current driving circuit 107, at least one second light-emitting diode 108, a second protection circuit 109, a third isolation circuit 114, a third current driving circuit 115, at least one third light-emitting diode 116 and a third protection circuit 117.

The present embodiment differs from the first embodiment by an additional third control signal output end of the signal control circuit 101 for outputting a third control signal Ctrl3 so that the present embodiment can simultaneously control the first light-emitting diode 104, the second light-emitting diode 108 and the third light-emitting diode 116. While the principle where the first light-emitting diode 104 and the second light-emitting diode 108 are controlled upon has been described in the first embodiment, the third light-emitting diode 116 is controlled upon the same principle and need not be discussed at length herein. The following description will be merely directed to the connection among the components of the third light-emitting diode 116.

The signal control circuit 101 comprises at least one first control signal output end for outputting a first control signal Ctrl1, a second control signal output end for outputting a second control signal Ctrl2 and a third control signal output end for outputting a third control signal Ctrl3. The signal control circuit 101 may be a PWM circuit.

The third isolation circuit 114 has an input end electrically connected to the third control signal output end of the signal control circuit 101 and comprises a third diode D3 and an eleventh resistor R11. Therein, an anode of the third diode D3 is electrically connected to the third control signal output end while the eleventh resistor R11 has one end electrically connected to a cathode of the third diode D3 and has one opposite end electrically connected to an input end of the third current driving circuit 115.

The third current driving circuit 115 has an input end electrically connected to an output end of the third isolation circuit 114 and receives the third control signal Ctrl3 and a negative feedback signal generated by the third protection circuit 117 so as to generate a third current signal ranging from 0.35 ampere to 0.7 ampere according to the third control signal Ctrl3.

The third light-emitting diode 116 has an anode electrically connected to an output end of the third current driving circuit 115 and receives the third current signal so as to be driven and generate an adjustable light intensity according to the third current signal. For example, the third control signal Ctrl3 may be set such that the third current driving circuit 115 outputs a specific third current signal and in turn adjusts the light intensity of the third light-emitting diode 116.

The third protection circuit 117 is serially connected between a cathode of the third light-emitting diode 116 and the ground node, and is electrically feedback-coupled to the input end of the third current driving circuit 115. The third protection circuit 117 may comprise a twelfth resistor R12 and a thirteenth resistor R13. Therein, the twelfth resistor R12 has one end electrically connected to the input end of the third current driving circuit 115 and has an opposite end electrically connected to the cathode of the third light-emitting diode 116. The thirteenth resistor R13 also has one end electrically connected to the cathode of the third light-emitting diode 116 and has an opposite end electrically connected to the ground node. The resistances of the twelfth resistor R12 and the thirteenth resistor R13 may be adjusted as needed.

Similarly, since the third current driving circuit 115 may be of a positive edge-triggered circuit or a negative edge-triggered circuit, for converting the third control signal Ctrl3 output by the signal control circuit 101 to a control signal with proper potential, the present embodiment further comprises a third pulse signal control circuit 118. As shown in Fig. 4, the third pulse signal control circuit 118 has an input end electrically connected to the third control signal output end and has an output end electrically connected to the input end of the third isolation circuit 114 so as to convert the third control signal Ctrl3 from the low potential to a high potential.

The third pulse signal control circuit 118 may comprise a fourteenth resistor R14, a third transistor T3, and a fifteenth resistor R15. Therein, the fourteenth resistor R14 has one end electrically connected to the third control signal output end and has an opposite end electrically connected to a base of the third transistor T3. The third transistor T3 is an NPN transistor that has an emitter electrically connected to the ground node and has a collector electrically connected to the input end of the third isolation circuit 114. The fifteenth resistor R15 has one end electrically connected to the collector of the third transistor T3 and has an opposite end electrically connected to the third control signal output end.

In addition, for preventing the current signal output by the third current driving circuit 115 from being blended with noise that causes irregular light intensity of the third light-emitting diode 116, the present embodiment may further comprises a third noise filtering circuit 119. The third noise filtering circuit 119 may be a third inductor L3, which is serially connected between the output end of the third current driving circuit 115 and the anode of the third light-emitting diode 116 for filtering the noise in the third current signal so that the third current signal can be stably output to drive the third light-emitting diode 116. Thereupon, the third light-emitting diode 116 is ensured from irregular light intensity.

In the present embodiment, the first light-emitting diode 104, the second light-emitting diode 108 and the third light-emitting diode 116 may be a green LED, a red LED and a blue LED, a yellow LED, a blue LED and another colored LED, or a white LED and other colored LEDs. Diverse LEDs may be selected and collocated according to a user's need.

For example, when the first light-emitting diode 104 is a green LED, the second light-emitting diode 108 is a red LED, and the third light-emitting diode 116 is a blue LED, the first control signal Ctrl1 with a signal value of 63%, the second control signal Ctrl2 with a signal value of 41% and the third control signal Ctrl3 with a signal value of 37% make the current driving circuits output the current signals each of 0.48 ampere so as to cause the mixed light of the first light-emitting diode 104, the second light-emitting diode 108 and the third light-emitting diode 116 to present the color temperature of 20,000K.

Through the first and second embodiments it is to be understood the signal control circuit 101 may have two, three or more control signal output ends, and can simultaneously control the plural sets of light-emitting diodes so as to make the light-emitting diodes so as to make the light-emitting diodes present different light intensities according to different control signals and in turn to cause the mixed light of the light-emitting diodes to present the color temperature adjustable in an extremely wide range of between 1,500K and 20,000K.

Although the particular embodiments of the invention have been described in detail for purposes of illustration, it will be understood by one of ordinary skill in the art that numerous variations will be possible to the disclosed embodiments without going outside the scope of the invention as disclosed in the claims.

## Claims

1. A color-temperature adjustable light-emitting device, comprising:
a signal control circuit, at least having a first control signal output end for outputting a first control signal, and a second control signal output end for outputting a second control signal;
a first isolation circuit, having an input end electrically connected to the first control signal output end;
a first current driving circuit, having an input end electrically connected to an output end of the first isolation circuit;
at least one first light-emitting diode, having an anode electrically connected to an output end of the first current driving circuit;
a first protection circuit, serially connected between a cathode of the first light-emitting diode and a ground node, and electrically feedback-coupled to the input end of the first current driving circuit;
a second isolation circuit, having an input end electrically connected to the second control signal output end;
a second current driving circuit, having an input end electrically connected to an output end of the second isolation circuit;
at least one second light-emitting diode, having an anode electrically connected to an output end of the second current driving circuit; and
a second protection circuit, serially connected between a cathode of the second light-emitting diode and the ground node, and electrically feedback-coupled to the input end of the second current driving circuit.

2. The light-emitting device of Claim 1, wherein a color temperature of a mixed light of the first light-emitting diode and the second light-emitting diode is ranging from 1,500K to 20,000K.

3. The light-emitting device of Claim 1, wherein the signal control circuit is a PWM circuit.

4. The light-emitting device of Claim 1, further comprising a first pulse signal control circuit, having an input end electrically connected to the first control signal output end and has an output end electrically connected to the input end of the first isolation circuit.

5. The light-emitting device of Claim 1, further comprising a first noise filtering circuit, which is serially connected between the output end of the first current driving circuit and the anode of the first light-emitting diode.

6. The light-emitting device of Claim 1, further comprising a first inductor, which is serially connected between the output end of the first current driving circuit and the anode of the first light-emitting diode.

7. The light-emitting device of Claim 1, further comprising a second pulse signal control circuit, having an input end electrically connected to the second control signal output end and has an output end electrically connected to the input end of the second isolation circuit.

8. The light-emitting device of Claim 1, further comprising a second noise filtering circuit, which is serially connected between the output end of the second current driving circuit and the anode of the second light-emitting diode.

9. The light-emitting device of Claim 1, further comprising a second inductor, which is serially connected between the output end of the second current driving circuit and the anode of the second light-emitting diode.

10. The light-emitting device of Claim 1, wherein the first light-emitting diode is a green light-emitting diode and the second light-emitting diode is a red light-emitting diode.

11. The light-emitting device of Claim 1, wherein the first light-emitting diode is a yellow light-emitting diode and the second light-emitting diode is a blue light-emitting diode.

12. The light-emitting device of Claim 1, wherein the first light-emitting diode is a white light-emitting diode and the second light-emitting diode is a colored light-emitting diode.

13. A color-temperature adjustable light-emitting device, comprising:
a signal control circuit, at least having a first control signal output end for outputting a first control signal, a second control signal output end for outputting a second control signal, and a third control signal output end for outputting a third control signal;
a first isolation circuit, having an input end electrically connected to the first control signal output end;
a first current driving circuit, having an input end electrically connected to an output end of the first isolation circuit;
at least one first light-emitting diode, having an anode electrically connected to an output end of the first current driving circuit;
a first protection circuit, serially connected between a cathode of the first light-emitting diode and a ground node, and electrically feedback-coupled to the input end of the first current driving circuit;
a second isolation circuit, having an input end electrically connected to the second control signal output end;
a second current driving circuit, having an input end electrically connected to an output end of the second isolation circuit;
at least one second light-emitting diode, having an anode electrically connected to an output end of the second current driving circuit;
a second protection circuit, serially connected between a cathode of the second light-emitting diode and the ground node, and electrically feedback-coupled to the input end of the second current driving circuit;
a third isolation circuit, having an input end electrically connected to the third control signal output end;
a third current driving circuit, having an input end electrically connected to an output end of the third isolation circuit;
at least one third light-emitting diode, having an anode electrically connected to an output end of the third current driving circuit; and
a third protection circuit, serially connected between a cathode of the third light-emitting diode and the ground node, and electrically feedback-coupled to the input end of the third current driving circuit.

14. The light-emitting device of Claim 13, wherein a color temperature of a mixed light of the first light-emitting diode, the second light-emitting diode and the third light-emitting diode is ranging from 1,500K to 20,000K.

15. The light-emitting device of Claim 13, wherein the signal control circuit is a PWM circuit.

16. The light-emitting device of Claim 13, further comprising a first pulse signal control circuit, having an input end electrically connected to the first control signal output end and has an output end electrically connected to the input end of the first isolation circuit.

17. The light-emitting device of Claim 13, further comprising a first noise filtering circuit, which is serially connected between the output end of the first current driving circuit and the anode of the first light-emitting diode.

18. The light-emitting device of Claim 13, further comprising a first inductor, which is serially connected between the output end of the first current driving circuit and the anode of the first light-emitting diode.

19. The light-emitting device of Claim 13, further comprising a second pulse signal control circuit, having an input end electrically connected to the second control signal output end and has an output end electrically connected to the input end of the second isolation circuit.

20. The light-emitting device of Claim 13, further comprising a second noise filtering circuit, which is serially connected between the output end of the second current driving circuit and the anode of the second light-emitting diode.

21. The light-emitting device of Claim 13, further comprising a second inductor, which is serially connected between the output end of the second current driving circuit and the anode of the second light-emitting diode.

22. The light-emitting device of Claim 13, further comprising a third pulse signal control circuit, having an input end electrically connected to the third control signal output end and has an output end electrically connected to the input end of the third isolation circuit.

23. The light-emitting device of Claim 13, further comprising a third noise filtering circuit, which is serially connected between the output end of the third current driving circuit and the anode of the third light-emitting diode.

24. The light-emitting device of Claim 13, further comprising a third inductor, which is serially connected between the output end of the third current driving circuit and the anode of the third light-emitting diode.

25. The light-emitting device of Claim 13, wherein the first light-emitting diode is a green light-emitting diode; the second light-emitting diode is a red light-emitting diode; and the third light-emitting diode is a blue light-emitting diode.

26. The light-emitting device of Claim 13, wherein the first light-emitting diode is a green light-emitting diode and the second light-emitting diode is a red light-emitting diode.

27. The light-emitting device of Claim 13, wherein the first light-emitting diode is a yellow light-emitting diode and the second light-emitting diode is a blue light-emitting diode.

28. The light-emitting device of Claim 13, wherein the first light-emitting diode is a white light-emitting diode and the second and the third light-emitting diodes are colored light-emitting diodes.

29. A control circuitry of a color-temperature adjustable light-emitting device, comprising:
a signal control circuit, at least having a control signal output end for outputting a control signal;
an isolation circuit, having an input end electrically connected to the control signal output end;
a current driving circuit, having an input end electrically connected to an output end of the isolation circuit and generating a current driving signal to drive a light-emitting diode, which has an anode electrically connected to an output end of the current driving circuit; and
a protection circuit, serially connected between a cathode of the light-emitting diode and a ground node, and electrically feedback-coupled to the input end of the current driving circuit;

30. The control circuitry of Claim 29, wherein the signal control circuit is a PWM circuit.

31. The control circuitry of Claim 29, further comprising a pulse signal control circuit, having an input end electrically connected to the control signal output end and has an output end electrically connected to the input end of the isolation circuit.

32. The control circuitry of Claim 29, further comprising a noise filtering circuit, which is serially connected between the output end of the current driving circuit and the anode of the light-emitting diode.

33. The control circuitry of Claim 29, further comprising a first inductor, which is serially connected between the output end of the current driving circuit and the anode of the light-emitting diode.
